# EUROPÄISCHE PATENTSCHRIFT

(11) **EP 0 362 561 B1**
(45) Veröffentlichungstag und Bekanntmachung des Hinweises auf die Patenterteilung: **23.02.1994**
(21) Anmeldenummer: 89116336.2
(22) Anmeldetag: 05.09.1989
(51) Int. Cl.: G11B 15/04, G11B 23/36

(54) **Verfahren zur Vermeidung des versehentlichen Ueberschreibens von auf einem Videomagnetband aufgezeichneten Videosignalabschnitten und Videomagnetbandrecorder zur Durchführung dieses Verfahrens**
Method of, and video magnetic tape recorder for avoiding the inadvertent overwriting of video signal parts recorded on a video magnetic tape
Procédé et appareil d'enregistrement à bande magnétique vidéo, pour empêcher la surécriture par inadvertance de segments de bande de signaux vidéo enregistrés sur une bande magnétique vidéo

(30) Priorität: 01.10.1988 DE 3833452
(43) Veröffentlichungstag der Anmeldung: 11.04.1990
(73) Patentinhaber: GRUNDIG E.M.V. Elektro-Mechanische Versuchsanstalt Max Grundig holländ. Stiftung & Co. KG., D-90762 Fürth (DE)
(72) Erfinder: Kornhaas, Wolfgang Grundig E.M.V., D-8510 Fürth/Bay. (DE)

(56) Entgegenhaltungen:
- EP-A- 0 053 734
- DE-A- 2 134 261
- DE-A- 2 710 950
- DE-A- 3 827 970
- FR-A- 2 305 823
- GB-A- 2 030 755
- GB-A- 2 165 686
- GB-A- 2 186 136
- US-A- 4 764 823

## Beschreibung

Die Erfindung betrifft ein Verfahren zur Vermeidung des versehentlichen Überschreibens von auf einem Videomagnetband aufgezeichneten Videosignalabschnitten und einen Videomagnetbandrecorder zur Durchführung dieses Verfahrens.

Aus der DE-PS 32 17 557 und der DE-OS 36 23 756 ist es bekannt, die in der Steuerspur eines Videomagnetbandes aufgezeichneten Steuerspurimpulse zu modifizieren, um dadurch zusätzliche Hilfsinformationen aufzuzeichnen zu können. Wiedergabeseitig können dann beispielsweise unerwünschte Programmteile wie Werbespots ausgeblendet werden oder ein Datumssignal oder auch der Titel der aufgezeichneten Sendung in das wiedergegebene Bild eingeblendet werden.

Aus der EP-A-0 257 534 ist eine Einrichtung zum Aufzeichnen und schnellen Wiederauffinden von Videosignalabschnitten auf einem Magnetband bekannt. Bei dieser Einrichtung werden aufzeichnungsseitig automatisch Informationen über die örtliche Lage jedes Videosignalabschnittes in einem geräteseitigen Halbleiterspeicher abgelegt, welcher zu Abspeicherung der Informationen einer Vielzahl von Magnetbandkassetten ausgelegt ist.

Ferner sind bereits Verfahren zur Vermeidung des versehentlichen Überschreibens von auf einem Videomagnetband aufgezeichneten Videosignalabschnitten bekannt. Bei einem dieser Verfahren wird an der Kassette, in der sich das Videomagnetband befindet, ein mechanischer Schalter umgelegt. Bei einem zweiten bekannten Verfahren wird eine am Kassettengehäuse angebrachte Kunststofflasche ausgebrochen.

Ausgehend von diesem Stand der Technik liegt der Erfindung die Aufgabe zugrunde, ein Verfahren zur Vermeidung des versehentlichen Überschreibens von auf einem Videomagnetband aufgezeichneten Videosignalabschnitten anzugeben, welches nicht auf mechanischen Maßnahmen am Kassettengehäuse beruht und welches es ermöglicht, für jeden Videosignalabschnitt individuell die Entscheidnung zu treffen, ob er vor versehentlichem Überschreiben geschützt sein soll oder nicht.

Diese Aufgabe wird durch ein Verfahren mit den im Anspruch 1 angegebenen Merkmalen gelöst. Vorteilhafte Ausgestaltungen des beanspruchten Verfahrens ergeben sich aus den Ansprüchen 2 und 3. Videomagnetbandrecorder zur Durchführung des Verfahrens sind Gegenstand der Ansprüche 4 - 8.

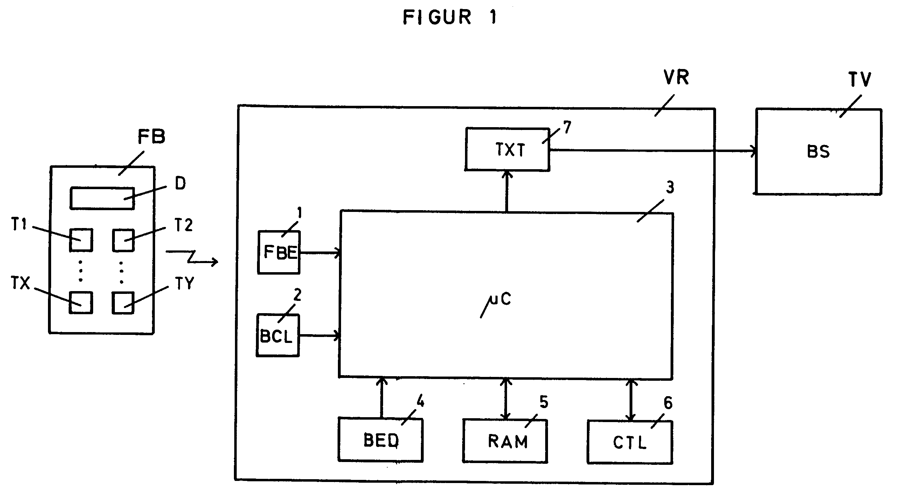

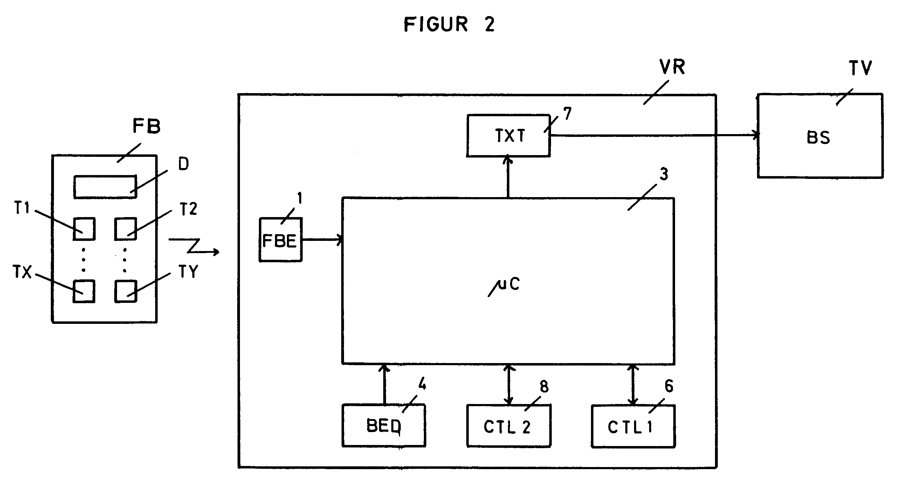

Die Vorteile der Erfindung bestehen insbesondere darin, daß das beanspruchte Verfahren mit einer Codierung der Steuerspurimpulse arbeitet, so daß mechanische Maßnahmen am Kassettengehäuse nicht notwendig sind. Ferner kann die Entscheidung, ob ein Videosignalabschnitt vor versehentlichem Überschreiben geschützt sein soll oder nicht, für jeden Videosignalabschnitt individuell getroffen werden. Weitere Vorteile der Erfindung bestehen darin, daß ein ursprünglich ohne Überschreibschutz aufgezeichneter Videosignalabschnitt nachträglich mit einem Überschreibschutz versehen werden kann oder daß der Überschreibschutz eines aufgezeichneten Videosignalschnittes nachträglich wieder entfernt werden kann. Weitere Vorteile der Erfindung ergeben sich aus der Erläuterung von Ausführungsbeispielen anhand der Figuren 1 und 2.

Die Figur 1 zeigt ein erstes Ausführungsbeispiel zur Erläuterung des beanspruchten Verfahrens.

Die Figur 2 zeigt ein zweites Ausführungsbeispiel zur Erläuterung des beanspruchten Verfahrens.

Die Figur 1 zeigt einen Fernbedienungsgeber FB, einen Videomagnetbandrecorder VR und ein mit einem Ausgang des Videomagnetbandrecorders verbundenes Fernsehgerät TV mit einem Bildschirm BS.

Der Fernbedienungsgeber FB weist ein Display D sowie Funktions- und Zifferntasten T1, T2, ...,TX, TY auf.

Der Videomagnetbandrecorder VR enthält einen Fernbedienungsempfänger 1, eine Barcode-Leseeinrichtung 2, einen Mikrocomputer 3, eine Nahbedienung 4, einen Speicher 5, einen Steuerspurmagnetkopf 6 und einen Textbaustein 7. Weiterhin enthält der Videomagnetbandrecorder die üblichen Signalverarbeitungsschaltungen und -einrichtungen, die jedoch zum Verständnis der Erfindung nicht notwendig sind und deshalb nicht gezeichnet wurden.

Im folgenden wird die Arbeitsweie der gezeigten Anordnung näher erläutert:

Durch Betätigung einer Taste der Fern- oder Nahbedienung wird dem Mikrocomputer 3 mitgeteilt, daß der Videomagnetbandrecorder VR zur Aufzeichnung eines Videosignalabschnittes programmiert werden soll. Der Mikrocomputer 3 initiiert daraufhin über den Textbaustein 7 die Anzeige des Schriftzuges "KASSETTE EINLEGEN" auf dem Bildschirm BS des Fernsehgerätes TV. Eine Identifikation der eingelegten Kassette erfolgt entweder automatisch beim Einlegen durch Abtastung eines am Gehäuse der Kassette angebrachten Barcode-Aufklebers mittels der Barcode-Leseeinrichtung 2 (siehe EP-OS 0 134 917 der Anmelderin) oder durch manuelle Eingabe der Kassettennummer durch den Benutzer. Anhand der Kassettennummer wählt der Mikrocomputer 3 einen der eingelegten Kassette zugeordneten Speicherbereich des Speichers 5 (siehe EP-A 0 257 534 der Anmelderin) an und überträgt die dort abgespeicherten Aufzeichnungsdaten der eingelegten Kassette in einem (nicht gezeichneten) Arbeitsspeicher. Diese abgespeicherten Aufzeichnungsdaten enthalten Informationen darüber, ob auf dem Magnetband der eingelegten Kassette bereits Videosignalabschnitte aufgezeichnet sind oder nicht sowie gegebenenfalls die Bandstände aller Aufzeichnungen und - beispielsweise in Form eines Kennbits - Informationen darüber, ob die einzelnen Aufzeichnungen mit einem Überschreibschutz versehen sind oder nicht. Ferner können die abgespeicherten Aufzeichnungsdaten den Titel des zugehörigen Videosignalabschnittes beinhalten.

Sind auf der eingelegten Kassette bereits Aufzeichnungen mit einem Überschreibschutz vorhanden, so enthalten die zugehörigen in der Steuerspur des Videomagnetbandes aufgezeichneten Steuerspurimpulse eine charakteristische Codierung, die beispielsweise in einer Impulsbreitenmodulation dieser Steuerspurimpulse bestehen kann.

Alternativ hierzu ist es auch möglich, die Aufzeichnungsdaten der Kassette in magnetischer Form auf dem Kassettenaufkleber zu speichern und beim Kassettenabtast bzw. -identifizierungsvorgang in den Speicher 5 zu übernehmen.

Nach dem Kassettenidentifizierungsvorgang initiiert der Mikrocomputer 3 automatisch einen sog. ATTS-Lauf (automatic tape time select) bzw. Initialisierungslauf, um den momentanen Bandstand zu ermitteln. Bei einem derartigen ATTS-Lauf, wie er beispielsweise in der DE-PS 26 50 665 der Anmelderin beschrieben ist, wird das Band nach dem Einlegen der Kassette kurz vor- und zurückgespult und aus den beim Umspulvorgang gemessenen Drehzahlen entweder der den Bandwickeln zugeordneten Wellen oder einer Welle eines Bandwickels und der Capstan-Welle mittels eines Rechenvorganges der Bandstand ermittelt.

Nach diesem ATTS-Lauf werden auf grundsätzlich bekannte Weise im Rahmen eines mikrocomputergesteuerten Programmierdialoges die Daten des aufzuzeichnenden Videosignalabschnittes mittels des Fernbedienungsgebers FB oder der Nahbedienung 4 eingegeben. Die Daten des aufzuzeichnenden Videosignalabschnittes sind insbesondere die Kanalnummer der aufzuzeichnenden Fernsehsendung, der Sendetag sowie der Anfangszeitpunkt und der Endzeitpunkt.

Sind die Daten des aufzuzeichnenden Videosignalabschnittes eingegeben, so initiiert der Mikrocomputer 3 die Anzeige des Schriftzuges "ÜBERSCHREIBSCHUTZ (JA/NEIN)" auf dem Bildschirm BS und erwartet die Eingabe von "JA", wenn der aufzuzeichnende Videosignalabschnitt überschreibgeschützt sein soll.

Ist der Programmierdialog abgeschlossen, so ermittelt der Mikrocomputer 3 anhand der eingegebenen Daten, des ermittelten Bandstandes und der Aufzeichnungsdaten der Kassette, ob genügend Aufzeichnungskapazität zur Verfügung steht, d.h. ob die Dauer des aufzuzeichnenden Videosignalabschnittes größer als die zur Verfügung stehende nicht überschreibgeschützte Bandlänge ist oder nicht.

Ist die Dauer des aufzuzeichnenden Videosignalabschnittes größer als die zur Verfügung stehende nicht überschreibgeschützte Bandlänge, so initiiert der Mikrocomputer 3 die Anzeige einer Kollisionsmeldung auf dem Bildschirm BS oder auf einer (nicht gezeichneten) Anzeigeeinheit des Videorecorders VR, so daß der Benutzer beispielseise eine andere Kassette einlegen kann. Ist die Dauer des aufzuzeichnenden Videosignalabschnittes kleiner als die zur Verfügung stehende nicht überschreibgeschützte Bandlänge, so werden die eingegebenen Daten in einem (nicht gezeichneten) Programmwunschspeicher des Videomagnetbandrecorders VR abgespeichert.

Zum Anfangszeitpunkt des aufzuzeichnenden Videosignalabschnittes wird unter Steuerung durch den Mikrocomputer 3 der Videomagnetbandrecorder VR auf den gewünschten Kanal zur Aufzeichnung eingeschaltet und gleichzeitig der Bandstand zum Aufzeichnungsbeginn im Speicher 5 abgespeichert. Handelt es sich beim aufzuzeichnenden Videosignalabschnitt um einen mit einem Überschreibschutz zu versehenden Beitrag, so wird unter Steuerung durch den Mikrocomputer 3 den mittels des Steuerspurmagnetkopfes 6 in der Steuerung des Magnetbandes aufzuzeichnenden Steuerspurimpulsen eine charakteristische Codierung aufgeprägt, beispielsweise in Form einer Impulsbreitenmodulation dieser Steuerspurimpulse. Nach Beendigung des Aufzeichnungsvorganges werden der Bandstand zum Aufzeichnungsende sowie ein Kennbit dafür, daß die aufgezeichnete Sendung überschreibgeschützt ist, im Speicher 5 abgespeichert.

Der Vorteil dieses Ausführungsbeispiels besteht insbesondere darin, daß der Benutzer bereits bei der Programmierung des Videomagnetbandrecorders eine Auskunft darüber erhält, ob auf der eingelegten Kassette genügend nicht überschreibgeschützte Bandlänge zur Aufzeichnung eines Beitrages zur Verfügung steht oder nicht.

Sieht man zusätzlich eine Betriebsart vor, bei der der Inhalt des Speichers 5 in Tabellenform auf dem Bildschirm BS dargestellt wird, so erhält der Benutzer unabhängig von der momentan eingelegten Kassette einen Überblick über den Inhalt aller Kassetten, deren Aufzeichnungsdaten im Speicher 5 abgelegt sind, insbesondere auch über eventuelle Aufzeichnungen, die mit einem Überschreibschutz versehen sind.

Die Figur 2 zeigt einen Fernbedienungsgeber FB, einen Videomagnetbandrecorder VR und ein mit einem Ausgang des Videomagnetbandrecorders verbundenes Fernsehgerät TV mit einem Bildschirm BS.

Der Fernbedienungsgeber FB weist ein Display D sowie Funktions- und Zifferntasten T1, T2, ..., TX, TY auf.

Der Videomagnetbandrecorder VR enthält einen Fernbedienungsempfänger 1, einen Mikrocomputer 3, eine Nahbedienung 4, einen ersten Steuerspurmagnetkopf 6, einen zweiten Steuerspurmagnetkopf 8 und einen Textbaustein 7. Weiterhin enthält der Videomagnetbandrecorder die üblichen Signalverarbeitungsschaltungen und -einrichtungen, die jedoch zum Verständnis der Erfindung nicht notwendig sind und deshalb nicht gezeichnet wurden.

Im folgenden wird die Arbeitsweise des gezeigten Ausführungsbeispiels näher erläutert.

Zunächst wird unter Verwendung des Fernbedienungsgebers FB oder der Nahbedienung 4 der Videomagnetbandrecorder VR zur Aufzeichnung eines Videosignalabschnittes programmiert. Die eingegebenen Daten sind insbesondere die Kanalnummer, der Sendetag sowie der Anfangszeitpunkt und der Endzeitpunkt.

Sind die Daten des aufzuzeichnenden Videosignalabschnittes eingegeben, so initiiert der Mikrocomputer 3 die Anzeige des Schriftzuges "UEBERSCHREIBSCHUTZ (JA/NEIN)" auf dem Bildschirm BS und erwartet die Eingabe von "JA", wenn der aufzuzeichnende Videosignalabschnitt überschreibgeschützt sein soll.

Alle eingegebenen Daten werden anschließend in einem (nicht gezeichneten) Programmwunschspeicher des Videomagnetbandrecorders VR abgespeichert.

Zum Anfangszeitpunkt des aufzuzeichnenden Videosignalabschnittes wird unter Steuerung durch den Mikrocomputer 3 der Videomagnetbandrecorder VR auf den gewünschten Kanal zur Aufzeichnung eingeschaltet.

Der in der Figur 2 gezeigte Videomagnetbandrecorder VR weist zwei Steuerspurmagnetköpfe 6 und 8 auf. Vor der Aufzeichnung von Videosignalen in die Schrägspuren des Magnetbandes werden mittels des voreilenden ersten Steuerspurmagnetkopfes 6 eventuell bereits in der Steuerspur aufgezeichnete Steuerspurimpulse wiedergegeben und dem Mikrocomputer 3 zugeführt.

Erkennt der Mikrocomputer 3, daß es sich bei den aus der Steuerspur wiedergegebenen Signalen um Steuerspurimpulse mit einer charakteristischen Codierung handelt, die die zugehörige Aufzeichnung als eine überschreibgeschützte Aufzeichnung identifizieren, so wird eine Aufzeichnung von Videosignalen auf die zugehörigen Videospuren unterbunden und gegebenenfalls die Anzeige einer Kollisionsmeldung auf dem Bildschirm BS oder einer Anzeigeeinheit des Videomagnetbandrecorders VR initiiert.

Erkennt der Mikrocomputer 3 hingegen, daß in der Steuerspur entweder noch keine Steuerspurimpulse aufgezeichnet sind, wie es bei einem noch unbespielten Band der Fall ist, oder daß es sich bei den aus der Steuerspur wiedergegebenen Signalen um Steuerspurimpulse handelt, die die charakteristische Codierung nicht aufweisen, so wird auf grundsätzlich bekannte Art und Weise eine Aufzeichnung von Videosignalen durchgeführt. Handelt es sich bei der aufzuzeichnenden Sendung um eine mit einem Überschreibschutz zu versehende Aufzeichnung, so werden die Steuerspurimpulse durch den zweiten Steuerspurmagnetkopf 8 unter Steuerung durch den Mikrocomputer 3 mit der charakteristischen Codierung aufgezeichnet, so daß der aufgezeichnete Videosignalschnitt überschreibgeschützt ist.

## Patentansprüche

1. Verfahren zur Vermeidung des versehentlichen Überschreibens von auf einem Videomagnetband aufgezeichneten Videosignalabschnitten, gekennzeichnet durch folgende Verfahrensschritte:
- vor einer Aufzeichnung eines Videosignalabschnittes auf das Videomagnetband wird überprüft, ob auf der Steuerspur des Videomagnetbandes bereits eine charakteristische Codierung aufweisende Steuerspurimpulse aufgezeichnet sind,
- beim Vorliegen von Steuerspurimpulsen mit der charakteristischen Codierung wird eine Aufzeichnung von Videosignalabschnitten auf den codierten Steuerspurimpulsen zugehörigen Videomagnetbandbereichen unterbunden, und
- beim Fehlen von Steuerspurimpulsen mit der charakteristischen Codierung werden bei der Aufzeichnung eines zu schützenden Videosignalabschnittes die zugehörigen Steuerspurimpulse auf der Steuerspur des Videomagnetbandes mit der charakteristischen Codierung aufgezeichnet.

2. Verfahren nach Anspruch 1, **dadurch gekennzeichnet**, daß die Überprüfung, ob auf der Steuerspur bereits die charakteristische Codierung aufweisende Steuerspurimpulse aufgezeichnet sind oder nicht, anhand von geräteseitig abgespeicherten Aufzeichnungsdaten der auf dem Videomagnetband bereits aufgezeichneten Videosignalabschnitte durchgeführt wird, wobei die abgespeicherten Aufzeichnungsdaten Informationen darüber enthalten, ob die den auf dem Videomagnetband aufgezeichneten Videosignalabschnitten zugeordneten Steuerspurimpulse die charakteristische Codierung aufweisen oder nicht.

3. Verfahren nach Anspruch 1, **dadurch gekennzeichnet**, daß die Überprüfung, ob auf der Steuerspur bereits die charakteristische Codierung aufweisende Steuerspurimpulse aufgezeichnet sind oder nicht, unter Verwendung eines zusätzlichen, die Steuerspur abtastenden Magnetkopfes erfolgt.

4. Videomagnetbandrecorder zur Durchführung des Verfahrens nach Anspruch 1 und 2, gekennzeichnet durch:
- eine Bedieneinheit (FB,1,4) zur Programmierung des Videomagnetbandrecorders (VR) und zur Initiierung des Überschreibschutzes,
- einen Halbleiterspeicher (5) zur Abspeicherung von Aufzeichnungsdaten,
- Mittel (FB,1,2) zur Identifizierung einer bestimmten Video-Magnetbandkassette im Hinblick auf die Zuordnung zu einem Speicherbereich des Halbleiterspeichers (5),
- einen mit der Bedieneinheit (FB,1,4), den Mitteln (FB,1,2) zur Identifizierung der bestimmten Video-Magnetbandkassette und dem Speicher (5) verbundenen Mikrocomputer (3), der die mittels der Bedieneinheit (FB,1,4) eingegebenen Programmierdaten mit den im Speicher (5) abgespeicherten Aufzeichnungsdaten des identifizierten Videomagnetbandes vergleicht und dann, wenn die Dauer des aufzuzeichnenden Videosignalabschnittes größer ist als die zur Verfügung stehende nicht überschreibgeschützte Bandlänge, eine Aufzeichnung unterbindet, und dann, wenn die Dauer des aufzuzeichnenden Videosignalabschnittes kleiner ist als die zur Verfügung stehende nicht überschreibgeschützte Bandlänge und wenn der aufzuzeichnende Videosignalabschnitt überschreibgeschützt sein soll, den Steuerspurmagnetkopf (6) zur Aufzeichnung von Steuerspurimpulsen mit der charakteristischen Codierung aktiviert.

5. Videomagnetbandrecorder nach Anspruch 4, **dadurch gekennzeichnet**, daß der Mikrocomputer (3) dann, wenn die Dauer des aufzuzeichnenden Videosignalabschnittes größer ist als die zur Verfügung stehende nicht überschreibgeschützte Bandlänge, die Anzeige einer Kollisionsmeldung auf einer Anzeigeeinheit (BS) initiiert.

6. Videomagnetbandrecorder nach Anspruch 4 oder 5, **dadurch gekennzeichnet**, daß die im Halbleiterspeicher (5) abgespeicherten Aufzeichnungsdaten in Tabellenform auf dem Bildschirm (BS) dargestellt werden.

7. Videomagnetbandrecorder zur Durchführung des Verfahrens nach Anspruch 1 und 3, gekennzeichnet durch:
- eine Bedieneinheit (FB,1,4) zur Initiierung des Überschreibschutzes,
- einen ersten Steuerspurmagnetkopf (6) zum Wiedergeben der in der Steuerspur des Videomagnetbandes aufgezeichneten Steuerspurimpulse,
- einen zweiten Steuerspurmagnetkopf (8) zur Aufzeichnung von Steuerspurimpulsen in der Steuerspur des Videomagnetbandes, und
- einen mit der Bedieneinheit (FB,1,4), dem ersten Steuerspurmagnetkopf (6) und dem zweiten Steuerspurmagnetkopf (8) verbundenen Mikrocomputer (3), der dann, wenn mittels des ersten Steuerspurmagnetkopfes (6) die charakteristische Codierung aufweisende Steuerspurimpulse wiedergegeben werden, eine Aufzeichnung von Videosignalabschnitten unterbindet, und dann, wenn mittels des ersten Steuerspurmagnetkopfes (6) keine die charakteristische Codierung aufweisende Steuerspurimpulse wiedergegeben werden und der aufzuzeichnende Videosignalabschnitt überschreibgeschützt sein soll, den zweiten Steuerspurmagnetkopf (8) zur Aufzeichnung von Steuerspurimpulsen mit der charakteristischen Codierung aktiviert.

8. Videomagnetbandrecorder nach Anspruch 7, **dadurch gekennzeichnet**, daß der Mikrocomputer (3) dann, wenn mittels des ersten Steuerspurmagnetkopfes (6) die charakteristische Codierung aufweisende Steuerspurimpulse wiedergegeben werden, die Anzeige einer Kollisionsmeldung auf einer Anzeigeeinheit (BS) initiiert.

## Claims

1. Method of avoiding the accidental overwriting of video signal sections recorded on a video magnetic tape, characterised by the following method steps:
- before a recording of a video signal section onto the video magnetic tape it is checked whether control track pulses having a characteristic coding have already been recorded on the control track of the video magnetic tape,
- in the presence of control track pulses with the characteristic coding, a recording of video signal sections is prevented on the regions of the video magnetic tape associated with the coded control track pulses, and
- in the absence of control track pulses with the characteristic coding, during the recording of a video signal section to be protected the associated control track pulses are recorded on the control track of the video magnetic tape with the characteristic coding.

2. Method according to Claim 1, characterised in that the checking as to whether control track pulses having the characteristic coding have or have not already been recorded on the control track is carried out on the basis of recording data of the video signal sections already recorded on the video magnetic tape, stored by the equipment, the stored recording data containing information on whether the control track pulses assigned to the video signal sections recorded on the video magnetic tape have or do not have the characteristic coding.

3. Method according to Claim 1, characterised in that the checking as to whether control track pulses having the characteristic coding have or have not already been recorded on the control track is performed using an additional magnetic head, scanning the control track.

4. Video magnetic tape recorder for carrying out the method according to Claims 1 and 2, characterised by:
- an operator control unit (FB,1,4) for programming the video magnetic tape recorder (VR) and for initiating the overwrite protection,
- a semiconductor memory (5) for storing recording data,
- means (FB,1,2) for identifying a particular video magnetic tape cassette with regard to the assignment to a memory area of the semiconductor memory (5),
- a microcomputer (3), which is connected to the operator control unit (FB,1,4), the means (FB,1,2) for identifying the particular video magnetic tape cassette and the memory (5) and which compares the programming data, entered by means of the operator control unit (FB,1,4), with the recording data of the identified video magnetic tape, stored in the memory (5), and prevents a recording whenever the duration of the video signal section to be recorded is greater than the available length of tape which is not overwrite-protected, and activates the control track magnetic head (6) for recording control track pulses with the characteristic coding whenever the duration of the video signal sections to be recorded is less than the available length of tape which is not overwrite-protected and whenever it is intended for the video signal section which is to be recorded to be overwrite-protected.

5. Video magnetic tape recorder according to Claim 4, characterised in that the microcomputer (3) initiates the display of a collision message on a display unit (BS) whenever the duration of the video signal section to be recorded is greater than the available length of tape which is not overwrite-protected.

6. Video magnetic tape recorder according to Claim 4 or 5, characterised in that the recording data stored in the semiconductor memory (5) are represented in tabular form on the screen (BS).

7. Video magnetic tape recorder for carrying out the method according to Claims 1 and 3, characterised by:
- an operator control unit (FB,1,4) for initiating the overwrite protection,
- a first control track magnetic head (6) for reproducing the control track pulses recorded on the control track of the video magnetic tape,
- a second control track magnetic head (8) for recording control track pulses on the control track of the video magnetic tape, and
- a microcomputer (3), which is connected to the operator control unit (FB,1,4), the first control track magnetic head (6) and the second control track magnetic head (8) and prevents a recording of video signal sections whenever control track pulses having the characteristic coding are reproduced by means of the first control track magnetic head (6), and activates the second control track magnetic head (8) for recording control track pulses with the characteristic coding whenever no control track pulses having the characteristic coding are reproduced by means of the first control track magnetic head (6) and it is intended for the video signal section which is to be recorded to be overwrite-protected.

8. Video magnetic tape recorder according to Claim 7, characterised in that the microcomputer (3) initiates the display of a collision message on a display unit (BS) whenever control track pulses having the characteristic coding are reproduced by means of the first control track magnetic head (6).

## Revendications

1. Procédé pour éviter l'enregistrement en surinscription par inadvertance sur des parties du signal vidéo enregistrés sur une bande magnétique vidéo, caractérisé par les étapes opératoires suivantes :
- avant un enregistrement d'une partie d'un signal vidéo sur la bande magnétique vidéo, on vérifie si des impulsions de piste de commande, présentant un codage caractéristique, sont déjà enregistrées sur la piste de commande de la bande magnétique vidéo,
- dans le cas de la présence d'impulsions de piste de commande présentant le codage caractéristique, un enregistrement de parties du signal vidéo sur des zones de la bande magnétique vidéo associées aux impulsions de piste de commande codées est interdite, et
- dans le cas de l'absence d'impulsions de piste de commande présentant le codage caractéristique, lors de l'enregistrement d'une partie d'un signal vidéo devant être protégée, les impulsions de piste de commande associées sont enregistrées sur la piste de commande de la bande magnétique vidéo avec le codage caractéristique.

2. Procédé selon la revendication 1, caractérisé en ce que la vérification du fait que des impulsions de piste de commande possédant le codage caractéristique sont ou non déjà enregistrées sur la piste de commande, est exécutée sur la base de données d'enregistrement, mémorisées côté appareil, des parties du signal vidéo déjà enregistrées sur la bande magnétique vidéo, les données mémorisées d'enregistrement contenant des informations indiquant si les impulsions de piste de commande associées aux parties du signal vidéo enregistrées sur la bande magnétique vidéo, possèdent ou non le codage caractéristique.

3. Procédé selon la revendication 1, caractérisé en ce que la vérification du fait que des impulsions de piste de commande possédant le codage caractéristique sont ou non déjà enregistrées sur la piste de commande, est exécutée moyennant l'utilisation d'une tête magnétique supplémentaire, qui explore la piste de commande.

4. Enregistreur à bande magnétique vidéo pour la mise en oeuvre du procédé selon les revendications 1 et 2, caractérisé par :
- une unité de commande (FB,1,4) servant à programmer le magnétoscope (VR) et déclencher la protection vis-à-vis d'un enregistrement en surinscription,
- une mémoire à semiconducteurs (5) servant à mémoriser des données d'enregistrement,
- des moyens (FB,1,2) pour identifier une cassette déterminée à bande magnétique vidéo en rapport avec l'association à une zone de la mémoire à semiconducteurs (5),
- un micro-ordinateur (3), qui est raccordé à l'unité de commande (FB,1,4), aux moyens (FB,1,2) servant à identifier la cassette déterminée à bande magnétique vidéo, et à la mémoire (5) et qui compare les données de programmation, introduites au moyen de l'unité de commande (FB,1,4), aux données d'enregistrement, mémorisées dans la mémoire (5), de la bande magnétique vidéo identifiée, puis interdit un enregistrement lorsque la durée de la partie du signal vidéo devant être enregistrée est supérieure à la longueur de bande disponible, non protégée vis-à-vis d'un enregistrement en surinscription, et active la tête magnétique (6) de la piste de commande pour l'enregistrement d'impulsions de pistes de commande présentant le codage caractéristique lorsque la durée de la partie du signal vidéo devant être enregistrée est inférieure à la longueur de bande disponible, non protégée vis-à-vis d'un enregistrement en surinscription et lorsque la partie du signal vidéo devant être enregistrée doit être protégée vis-à-vis d'un enregistrement en surinscription.

5. Enregistreur à bande magnétique vidéo selon la revendication 4, caractérisé en ce que lorsque la durée de la partie du signal vidéo devant être enregistrée est supérieure à la longueur de bande disponible, non protégée vis-à-vis d'un enregistrement en surinscription, le micro-ordinateur (3) déclenche l'affichage d'une signalisation de collision sur l'unité d'affichage (BS).

6. Enregistreur à bande magnétique vidéo selon la revendication 4 ou 5, caractérisé en ce que les données d'enregistrement mémorisées dans la mémoire à semiconducteurs (5) sont représentées sous la forme d'un tableau sur l'écran (BS).

7. Enregistreur à bande magnétique vidéo pour la mise en oeuvre du procédé selon les revendications 1 et 3, caractérisé par :
- une unité de commande (FB,1,4) pour déclencher la protection vis-à-vis d'un enregistrement en surinscription,
- une première tête magnétique de piste de commande (6) pour reproduire les impulsions de piste de commande enregistrées sur la piste de commande de la bande magnétique vidéo,
- une seconde tête magnétique de piste de commande (8) pour l'enregistrement d'impulsions de piste de commande sur la piste de commande de la bande magnétique vidéo, et
- un micro-ordinateur (3), qui est raccordé à la première tête magnétique de piste de commande (6) et à la seconde tête magnétique de piste de commande (8) et qui interdit un enregistrement de parties du signal vidéo lorsque des impulsions de piste de commande comportant le codage caractéristique sont reproduites au moyen de la première tête magnétique de piste de commande (6), et active la seconde tête magnétique de piste de commande (8) pour l'enregistrement d'impulsions de piste de commande comportant le codage caractéristique, lorsqu'aucune impulsion de piste de commande comportant le codage caractéristique n'est reproduite au moyen de la première tête magnétique de piste de commande (6) et que la partie du signal vidéo devant être enregistrée doit être protégée vis-à-vis d'un enregistrement en surinscription.

8. Enregistreur à bande magnétique vidéo selon la revendication 7, caractérisé en ce que des impulsions de piste de commande comportant le codage caractéristique sont reproduites au moyen de la première tête magnétique de piste de commande (6), l'affichage d'une signalisation de collision est déclenché dans une unité d'affichage (BS).
